# EUROPÄISCHE PATENTSCHRIFT

(11) **EP 1 502 015 B1**
(45) Veröffentlichungstag und Bekanntmachung des Hinweises auf die Patenterteilung: **31.08.2005**
(21) Anmeldenummer: 02792643.5
(22) Anmeldetag: 07.12.2002
(51) Int. Cl.: F01N 11/00

(54) **VERFAHREN UND ELEKTRONISCHE STEUEREINRICHTUNG ZUR DIAGNOSE EINES KATALYSATORS**
METHOD AND ELECTRONIC CONTROL UNIT FOR DIAGNOSING A CATALYTIC CONVERTER
PROCEDE ET DISPOSITIF DE COMMANDE ELECTRONIQUE POUR EFFECTUER UN DIAGNOSTIC SUR UN CATALYSEUR

(30) Priorität: 23.04.2002 DE 10218015
(43) Veröffentlichungstag der Anmeldung: 02.02.2005
(73) Patentinhaber: ROBERT BOSCH GMBH, 70442 Stuttgart (DE)
(72) Erfinder: WACKEROW, René, 71254 Ditzingen (DE); SCHNEIDER, Erich, 74366 Kirchheim (DE)
(86) Internationale Anmeldenummer: PCT/DE2002/004493
(87) Internationale Veröffentlichungsnummer: WO 2003/091552

(56) Entgegenhaltungen:
- DE-C- 19 623 335
- US-A- 4 622 809
- US-A- 5 842 339
- US-A- 6 105 366

## Beschreibung

### Stand der Technik

Die Erfindung geht aus von einem Verfahren und einer Vorrichtung zur Diagnose eines Katalysators nach der Gattung der unabhängigen Ansprüche.

Aus der Patentschrift DE 196 23 335 Cl sind ein gattungsgemäßes Verfahren und eine Vorrichtung bekannt, bei denen ein Abbruch der Diagnose des Katalysators beim Vorliegen bestimmter Stoppkriterien vorgesehen ist. Ein Stoppkriterium ist das Erreichen eines Schwellenwerts des Eintrags von Sauerstoff in den Katalysator oder des Austrags von Sauerstoff aus dem Katalysator. Die Begrenzung der Diagnose berücksichtigt Nichtlinearitäten im Sauerstoffspeicherverhalten des Katalysators. Die Sauerstoffspeicherung im Katalysator bei hohem Sauerstoffeintrag oder Sauerstoffaustrag kann nicht durch die gleichen Modellparameter beschrieben werden wie bei niedrigem Sauerstoffeintrag oder Sauerstoffaustrag.

Der Abbruch oder die Nichtauslösung der Diagnose unter solchen Bedingungen vermeidet einerseits zuverlässig falsche Diagnoseergebnisse, reduziert aber andererseits auch die Diagnoserate.

Der Erfindung liegt die Aufgabe der Erfindung zu Grunde, das bekannte zuverlässige Verfahren so zu verändern, dass die Diagnose bei im typischen Alltagsbetrieb auftretenden Fahrprofilen (Verlauf der Fahrzeuggeschwindigkeit über der Zeit) häufiger ausgelöst wird und/oder häufiger mit einem Ergebnis abgeschlossen wird.

Die Aufgabe wird durch die in den unabhängigen Ansprüchen angegebenen Merkmale gelöst.

### Vorteile der Erfindung

Gemäß der Erfindung ist vorgesehen, den Schwellenwert für die sauerstoffabhängige Katalysatorbelastung vom Signal einer Abgassonde hinter Kat abhängig zu machen.

Die Erfindung basiert auf der Erkenntnis der folgenden Zusammenhänge: Bei dem bekannten Verfahren der Katalysatordiagnose wird die Auslösung der Diagnose hauptsächlich über ein Verlassen des erlaubten Last/Drehzahl-Bereiches eingeschränkt. Der feste Last/Drehzahlbereich hat zur Folge, dass die obere Schwelle mit Rücksicht auf einen Grenzkatalysator, das ist ein Katalysator, der die geforderte Konvertierung gerade nicht mehr erreicht, bestimmt werden muß. Andernfalls könnten bei höheren Sauerstoffeinträgen oder Sauerstoffausträgen noch gute Katalysatoren nicht von gerade schlechten Katalysatoren unterschieden werden. Auf der anderen Seite verlieren Katalysatoren bis auf einige Ausnahmen ihre Konvertierungsfähigkeit so langsam, dass sie erst bei einer Fahrzeugfahrleistung in der Größenordnung von 200.000 km den Grenzkatalysatorzustand erreichen.

Die Katalysatordiagnose wird anhand der Amplitude des Signals der Abgassonde hinter Kat und anhand einer Grenzwertmodellamplitude durchgeführt. Kleine Amplituden des Signals der Abgassonde hinter Kat deuten auf einen guten Katalysator hin, der noch größere Sauerstoffeinträge oder Sauerstoffausträge als ein Grenzkatalysator puffert und daher auch noch bei größeren Sauerstoffeinträgen oder Sauerstoffausträgen mit dem vorbekannten Verfahren geprüft werden kann. Bei der anschließenden Prüfung können wenig gealterte Katalysatoren zuverlässig als gut beurteilt werden. Ergibt die Prüfung jedoch kein deutliches, auf einen guten Katalysator deutendes Ergebnis, kann nicht sicher auf einen schlechten Katalysator geschlossen werden.

Die Diagnose kann demnach durch die Prüfung bei höheren Sauerstoffeinträgen oder Sauerstoffausträgen zuverlässig bestätigt werden, aber nicht zuverlässig widerlegt werden. In dem Fall, dass die Diagnose nicht bestätigt wurde, kann die Prüfung bei niedrigeren Sauerstoffeinträgen oder Sauerstoffausträgen wiederholt werden, um zuverlässig zwischen einem noch guten und einem bereits schlechten Katalysator unterscheiden zu können.

Der Vorteil des erfindungsgemäßen Verfahrens liegt damit darin, dass die Diagnose bei kleinen Amplituden des Signals der Abgassonde hinter Kat öfter ausgelöst wird und/oder dass sie seltener abgebrochen wird. Dadurch, dass gute Katalysatoren in diesem Fall zuverlässig als gut bestätigt werden, kann in diesem Fall die Häufigkeit, mit der Diagnoseergebnisse erzielt werden, gesteigert werden.

Vorteilhafte Weiterbildungen und Ausgestaltungen ergeben sich aus den abhängigen Ansprüchen.

Eine Ausgestaltung sieht vor, dass der Schwellenwert abhängig von der Schwankungsbreite des Signals der Abgassonde hinter Kat vorgegeben wird.

Eine weitere Ausgestaltung zeichnet sich dadurch aus, dass einer bestimmten Schwankungsbreite ein bestimmter Schwellenwert zugeordnet ist und dass der Schwellenwert verkleinert wird, wenn die Schwankungsbreite die bestimmte Schwankungsbreite unterschreitet.

Eine weitere Ausgestaltung sieht vor, dass einer bestimmten Schwankungsbreite ein bestimmter Schwellenwert zugeordnet ist und dass der Schwellenwert vergrößert wird, wenn die Schwankungsbreite die bestimmte Schwankungsbreite überschreitet.

Diese Ausgestaltung kann dadurch ergänzt werden, dass der Katalysator als nicht funktionsfähig beurteilt wird, wenn das Maß für die Abweichung nach einer vorgegebenen Zeitspanne einen vorgegebenen Diagnose-Schwellenwert überschreitet.

Gemäß einer weiteren Ausgestaltung werden zeitlich aufeinander folgende Werte der Differenz der Amplitude des Signals der Abgassonde hinter Kat und der Grenzwertmodellamplitude aufsummiert (integriert).

Eine weitere Ausgestaltung sieht vor, dass die Aufsummation unterbleibt, wenn die sauerstoffabhängige Katalysatorbelastung einen vorgegebenen Maximalwert überschreitet oder einen vorgegebenen Minimalwert unterschreitet.

Gemäß einer weiteren Ausgestaltung unterbleibt die Aufsummation, wenn die sauerstoffabhängige Katalysatorbelastung, entsprechend dem in den Katalysator pro Zeiteinheit einströmende Sauerstoffüberschuß oder Mangel einen vorgegebenen Maximalwert überschreitet oder Minimalwert unterschreitet.

Eine weitere Ausgestaltung zeichnet sich dadurch aus, dass bei der Ermittlung der Katalysatorbelastung das Produkt der von der Brennkraftmaschine, gegebenenfalls pro Zeiteinheit, angesaugten Luftmasse oder Luftmenge und der von der Abgassonde vor Kat erfaßten Abweichung der Sauerstoffkonzentration im Abgas von der bei stöchiometrischer Verbrennung auftretenden Sauerstoffkonzentration berücksichtigt wird.

Gemäß einer weiteren Ausgestaltung wird bei der Ermittlung der Katalysatorbelastung die Integration des Produkts der von der Brennkraftmaschine, gegebenenfalls pro Zeiteinheit, angesaugten Luftmasse oder Luftmenge und der Abweichung der Stellgröße eines Gemischregelkreises vom einem neutralen Wert berücksichtigt.

Die Erfindung richtet sich auch auf eine elektronische Steuereinrichtung zur Durchführung wenigstens eines der oben angegebenen Verfahren und/oder einer der oben genannten Ausgestaltungen und Weiterbildungen.

Weitere vorteilhafte Ausgestaltungen und Weiterbildungen des erfindungsgemäßen Verfahrens und der erfindungsgemäßen Vorrichtung ergeben sich aus weiteren abhängigen Ansprüchen und aus der folgenden Beschreibung.

### Zeichnung

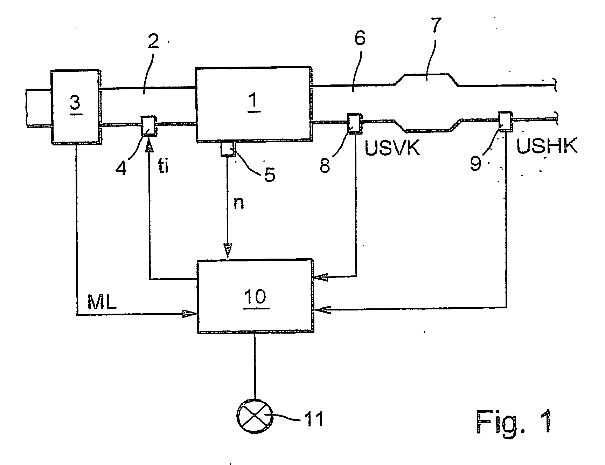

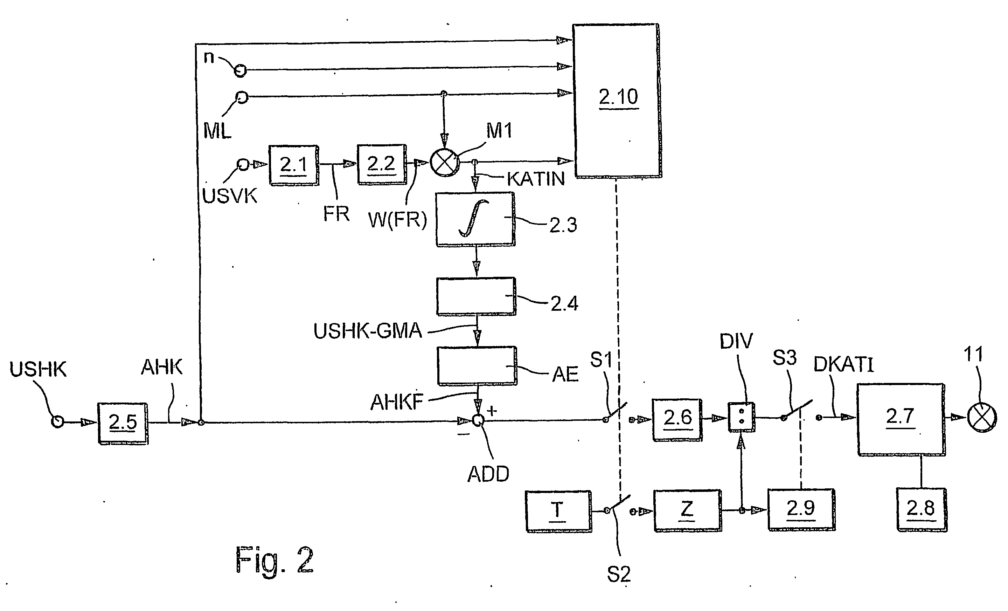

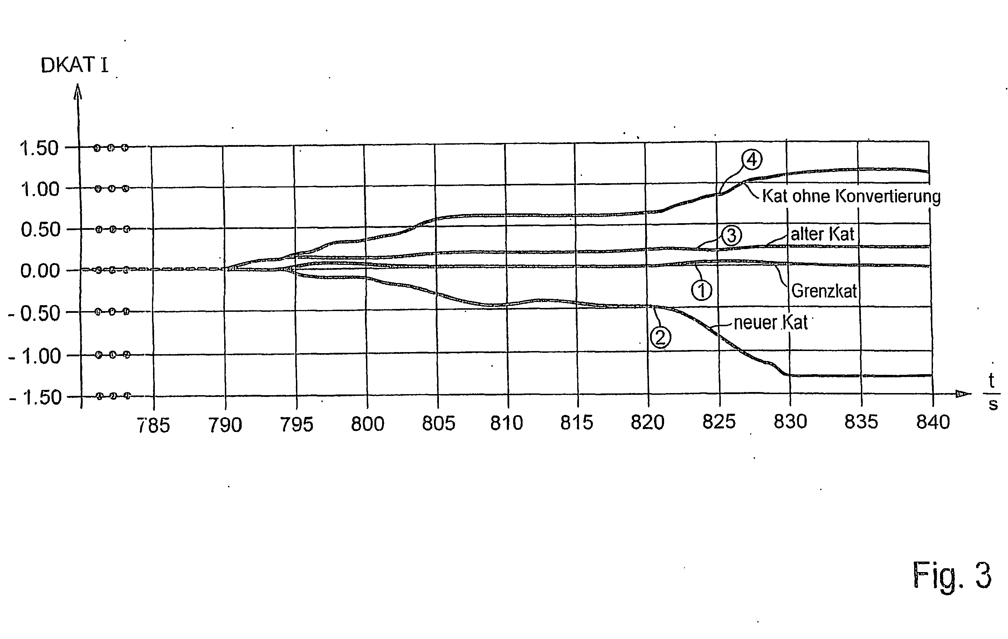

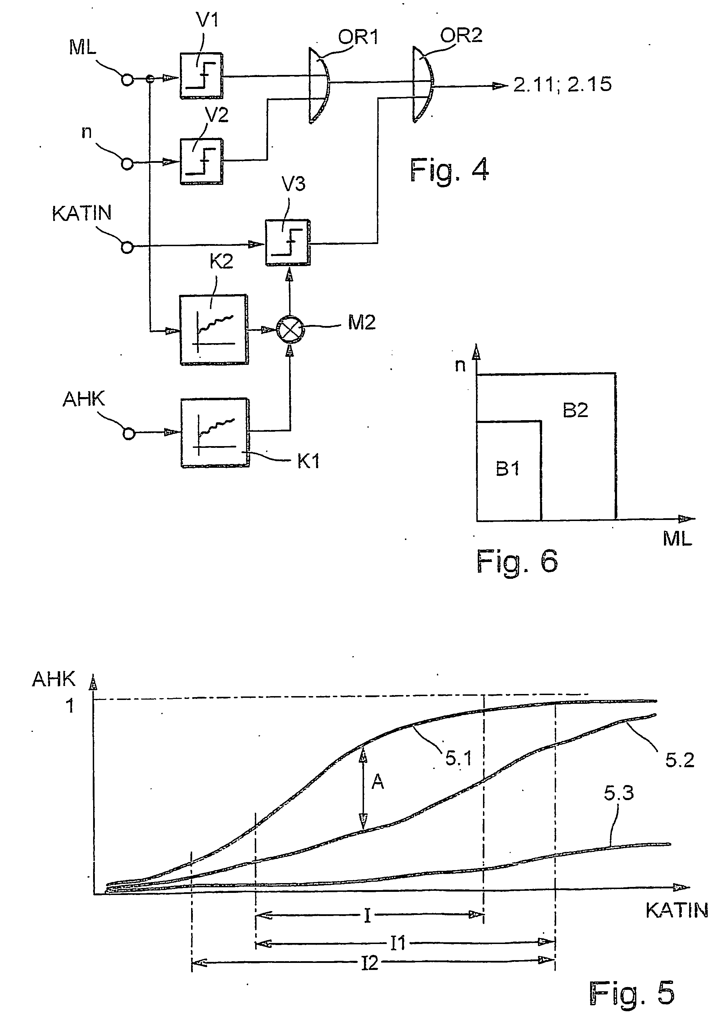

Figur 1 zeigt das technische Umfeld, Fig. 2 stellt ein Ausführungsbeispiel der Erfindung in der Form von Funktionsblöcken dar, Fig. 3 veranschaulicht die Kriterien, mit denen funktionsfähige Katalysatoren von funktionsunfähigen Katalysatoren unterschieden werden können, Fig. 4 offenbart weitere Details eines Ausführungsbeispiels der Erfindung, Fig. 5 verdeutlicht auf den Wert 1 normierte Amplituden bezogen auf eine Katalysatorbelastung für verschieden stark gealterte Katalysatoren und Fig. 6 zeigt Bereiche im Last/Drehzahlbereich einer Brennkraftmaschine, in den denen die Katalysatordiagnose nach dem Stand der Technik und im Unterschied dazu nach der Erfindung durchgeführt werden kann.

Figur 1 zeigt eine Brennkraftmaschine 1 mit einem Saugrohr 2, einem Lasterfassungsmittel 3 zur Erfassung wenigstens der angesaugten Luftmasse ML oder der Luftmenge, einem Kraftstoffzumessmittel 4, einem Drehzahlsensor 5, der ein Drehzahlsignal n abgibt, einem Abgassystem 6, einem Katalysator 7, einer Abgassonde 8 vor Kat, die ein Signal USVK abgibt, einer Abgassonde 9 hinter Kat, die ein Signal USHK abgibt, einem Steuergerät 10, das ein Kraftstoffzumesssignal ti an das Kraftstoffzumessmittel 4 abgibt, und einem Mittel 11 zur Anzeige eines Fehlers.

Das Steuergerät 10 erhält die Signale ML des Lasterfassungsmittels 3, n des Drehzahlsensors 5 sowie die Signale USVK und USHK der beiden Abgassonden 8, 9 jeweils zugeführt und ermittelt daraus das Kraftstoffzumesssignal ti, beispielsweise eine Einspritzimpulsbreite zur Ansteuerung von Einspritzventilen als Ausgestaltung des Kraftstoffzumessmittels 4. Dazu kann beispielsweise ein Basiswert des Ansteuersignals ti für das Kraftstoffzumessmittel 4 als Funktion der angesaugten Luftmasse ML oder der Luftmenge und der Drehzahl n bestimmt werden. Der Basiswert kann in einem Regelkreis durch eine Reglerstellgröße FR korrigiert werden, die in bekannter Weise durch Anwendung einer PI-Regelstrategie auf die Abweichung des Signals USVK der Abgassonde 8 vor Kat von einem Sollwert erzeugt werden kann. In die Bildung des Kraftstoffzumeßsignals ti kann zusätzlich, beispielsweise zur Sollwertbildung, das Signal USHK der Abgassonde 9 hinter Kat einbezogen werden.

Nach dem aus dem Stand der Technik bekannten Verfahren wird das Signal USHK der Abgassonde 9 hinter Kat erfaßt. Weiter werden stromaufwärts des Katalysators 7 messbare Größen, die den Sauerstoffeintrag in den Katalysator 7 beeinflussen, erfaßt. Beispiele solcher Größen sind die angesaugte Luftmasse ML oder die Luftmenge und die Reglerstellgröße FR oder das Signal USVK der Abgassonde 8 vor Kat. Aus wenigstens einer dieser stromaufwärts des Katalysators 7 erfassten Größen wird eine sauerstoffabhängige Katalysatorbelastung KATIN ermittelt aus der danach ein Grenzwertmodellsignal USHK-GMS und daraus wiederum eine Grenzwertmodellamplitude AHKF für das Signal USHK der Abgassonde 9 hinter Kat bzw. deren Amplitude AHK berechnet wird. Das Grenzwertmodellsignal USHK-GMS entspricht einem Signalverlauf, der abhängt von einem modellierten Sauerstofffüllstand des Katalysators 7 auf der Basis von den beschriebenen stromaufwärts des Katalysators 7 messbaren Größen. Dabei wird der Bildung des Grenzwertmodellsignals USHK-GMS der (hypothetische) Einfluß eines gerade noch als gut zu beurteilenden Katalysators 7 zu Grunde gelegt.

Anschließend erfolgt die Bildung einer Katalysatorbeurteilungsgröße DKATI als Funktion der Differenz der Grenzwertmodellamplitude AHKF und der Amplitude AHK des Signals der Abgassonde 9 hinter Kat. Ist der reale Katalysator 7 noch besser als der Modellkatalysator, der der Bildung des Grenzwertmodellsignals USHK-GMS zu Grunde liegt und der einen gerade noch guten Katalysator darstellt, werden die Amplituden AHK kleiner sein als die Grenzwertmodellamplituden AHKF.

Unter der Voraussetzung, dass die DKATI-Bildung das Vorzeichen der Differenz AHKF minus AHK erhält, wird der Katalysator 7 demnach als gut beurteilt, wenn sich DKATI als positiv herausstellt. Stellt sich DKATI dagegen als negativ heraus, wird der Katalysator 7 als schlecht beurteilt und gegebenenfalls das Anzeigemittel 11 aktiviert.

Der Katalysator 7 wird demnach also beurteilt durch ein Verfahren, bei dem die Amplitude AHK des Signals USHK der Abgassonde 9 hinter Kat erfaßt wird, bei dem eine Grenzwertmodellamplitude AHKF aus der sauerstoffabhängigen Katalysatorbelastung KATIN aus wenigstens einer stromaufwärts des Katalysators 7 gemessenen Größe gebildet wird, bei dem die Abweichung der Amplitude AHK des Signals USHK von der Grenzwertmodellamplitude AHKF ermittelt wird, und bei dem die Funktionsfähigkeit des Katalysators 7 auf der Basis einer aus der Abweichung ermittelten Katalysatorbeurteilungsgröße DKATI beurteilt wird.

Der Katalysator 7 wird vorteilhafterweise dann als nicht funktionsfähig beurteilt, wenn die Katalysatorbeurteilungsgröße erst nach einer vorgegebenen Zeitspanne einen vorgegebenen Diagnose-Schwellenwert überschreitet.

Als Maß für die Abweichung der Amplitude AHK des Signals USHK von der Grenzwertmodellamplitude AHKF können zeitlich aufeinander folgende Werte der Differenz beider Werte aufsummiert (integriert) werden. Zweckmäßigerweise wird mit einer Division ein Bezug zur Zeit hergestellt. Das erhaltene zeitlich gemittelte Signal kann die Katalysatorbeurteilungsgröße DKATI sein.

Einzelheiten zu Signalverläufen, die in diesem Zusammenhang ausgewertet werden, sind der bereits eingangs genannten Patentschrift DE 196 23 335 Cl (US 5 987 883) zu entnehmen. Das angegebene DE-Patent bzw. das US-Patent soll daher in die Offenbarung dieser Erfindung mit einbezogen sein.

Figur 2 zeigt ein Ausführungsbeispiel der Erfindung in einer Funktionsblockdarstellung. In einem ersten Block 2.1 wird aus dem Signal USVK der Abgassonde 8 vor Kat die Reglerstellgröße FR gebildet. Ein zweiter Block 2.2 dient zur Herausfilterung eines Wechselanteils W(FR) der Reglerstellgröße FR. Alternativ wird direkt der Wechselanteil W(FR) des Signals USVK aus dem Signal USVK herausgefiltert. Dieses kann beispielsweise durch die Bildung der Differenz von Momentan- und Mittelwert der Reglerstellgröße FR oder des Signals USVK geschehen. Der Wechselanteil W(FR) stellt seinem Betrag und Vorzeichen nach ein Maß für den Sauerstoffgehalt des Abgases dar.

Durch Multiplikation der angesaugten Luftmasse ML oder der Luftmenge in einem ersten Multiplikationsglied M1 wird eine Größe KATIN erhalten, die ein Maß für den positiven oder negativen Eintrag von Sauerstoff in den Katalysator 7 ist. KATIN ist demnach ein Maß für die Katalysatorbelastung. Die Integration dieser Größe in einem dritten Block 2.3 liefert ein Maß für den aktuellen Sauerstofffüllstand des Katalysators 7. Die Integration verläuft dabei in Grenzen, wie sie für einen gerade noch brauchbaren Katalysator 7 typisch sind. Kann ein solcher Katalysator 7 beispielsweise eine Menge X0 an Sauerstoff speichern und wird dieser Wert bei der Integration erreicht, so wird das Integrationsergebnis bis zur Umkehr der Integrationsrichtung konstant gehalten.

In dieser Zeit verharrt das in einem vierten Block 2.4 gebildete Grenzwertmodellsignal USHK-GMS für das Signal der Abgassonde 9 hinter Kat auf einem für sauerstoffreiches Abgas charakteristischen Niveau. Dies deshalb, weil davon ausgegangen werden muss, dass der bereits gefüllte Katalysator 7 weiteren Sauerstoffeintrag weitergibt.

Bei einem Vorzeichenwechsel von FR (oder USVK) ändert auch KATIN das Vorzeichen und die Integrationsrichtung im dritten Block 2.3 kehrt sich um. Wurde der Katalysator 7 vorher mit Sauerstoff gefüllt, so wird er jetzt entleert. Sobald der Integrationswert einen leeren Katalysator 7 repräsentiert, wird das Grenzwertmodellsignal USHK-GMS im vierten Block 2.4 auf einen für sauerstoffarmes Abgas charakteristischen Wert geändert. Das Grenzwertmodellsignal USHK-GMS wird demnach abhängig von einem modellierten Katalysatorfüllstand auf der Basis einer Hypothese für den Katalysatorzustand und weiter auf der Basis von stromaufwärts des Katalysators 7 messbaren Größen, die den Sauerstoffeintrag in den Katalysator 7 repräsentieren, gebildet.

In einer Amplitudenermittlung AE wird die Amplitude AHKF des Grenzwertmodellsignals USHK-GMS und in einem fünften Block 2.5 die Amplitude AHK des Signals USHK der Abgassonde 9 hinter Kat jeweils ermittelt. In einem Addierer ADD erfolgt eine Differenzbildung der Amplituden AHK und AHKF. Vorhandene Schalter S1, S2, S3 werden zunächst als geschlossen vorausgesetzt. Anschließend wird die Differenz in einem sechsten Block 2.6 integriert. Zum Erhalten eines Mittelwerts des Integrationsergebnisses ist eine Division mit der Zeit vorgesehen. Vorhanden sind daher ein Taktgeber T, dessen Taktsignal in einem Ereigniszähler Z integriert wird. Das Ausgangssignal des Ereigniszählers ist ein Maß für die Zeit und es wird in einem Dividierer DIV zur Division des Ausgangssignals des Integrators im sechsten Block 2.6 herangezogen. Das gemittelte Signal ist die Katalysatorbeurteilungsgröße DKATI, die in einem siebten Block 2.7 mit einem Schwellenwert verglichen wird.

Abhängig vom Ergebnis des Vergleichs im siebten Block 2.7 wird in einem achten Block 2.8 ein Diagnoseabschlussbit gesetzt, wenn die Diagnose einen funktionsfähigen Katalysator 7 ergab. Gegebenenfalls kann, wenn das Ergebnis der Diagnose eindeutig einen schlechten, nicht mehr funktionsfähigen Katalysator 7 ergab, das Anzeigemittel 11 aktiviert werden.

Die Kriterien, die eine Unterscheidung von guten und schlechten Katalysatoren 7 erlauben, werden anhand von Fig. 3 erläutert, die den zeitlichen Verlauf des gemittelten Integrals DKATI der Differenz von Grenzwertmodellamplitude AHKF und Amplitude AHK für vier verschieden gealterte Katalysatoren 7 zeigt.

Die Linie 1 entspricht einem Katalysator 7, der sich im ungefähr gleichen Alterungszustand befindet wie der Modellkatalysator, der der Bildung des Grenzwertmodellsignals USHK-GMS zu Grunde liegt. Dementsprechend gering fällt die Differenz und damit auch das zeitlich gemittelte Integral der Differenz zwischen der Grenzwertmodellamplitude und der Amplitude AHK aus. Die in der Nähe von Null verlaufende Linie 1 deutet also auf einen Katalysator 7 hin, der dem Modellkatalysator gleicht und damit die Anforderungen an die Schadstoffkonvertierung gerade noch erfüllt.

Die Linie 2 entspricht einem neuen Katalysator 7, der besser ist als der Modellkatalysator. Der neue Katalysator 7 dämpft die Amplitude der Oszillationen im Sauerstoffgehalt des Abgases stärker als der Modellkatalysator. Die erhaltenen Amplituden AHK daher kleiner als die Grenzwertmodellamplituden AHKF, so dass die Differenz kleiner als Null ist. Die deutlich unterhalb der Nullinie verlaufende Linie 2 deutet also auf einen noch guten Katalysator 7 hin.

Umgekehrte Verhältnisse herrschen bei den Linien 3 und 4, die auf schlechte Katalysatoren 7 hindeuten. In beiden Fällen ist die erhaltene Amplitude AHK größer als die Grenzwertmodellamplitude AHKF.

Aus diesem Sachverhalt ergibt sich, dass durch eine zwischen dem schlechten und dem guten Katalysator 7 verlaufende Schwelle die noch guten von den bereits schlechten Katalysatoren 7 getrennt werden können. Die Lage der Schwelle, bspw. der Wert Null hängt, dabei von der Vorzeichenkonvention im Addierer ADD und der Modellannahme ab, die der Grenzwertmodellamplitudenbildung zu Grunde liegt. Wird der Grenzwertmodellamplitudenbildung bspw. ein neuer Katalysator 7 zu Grunde gelegt, ergibt sich ein Verlauf in der Nähe von Null auch nur bei einem realen neuen Katalysator 7. Der Grad der Verschlechterung wäre in diesem Fall am Abstand der gemessenen Verläufe zur Nullinie zu messen, wobei allerdings alle Linien oberhalb der Nullinie verlaufen würden.

Bei der bisherigen Darstellung wurde ein durchgehender Signalpfad zwischen dem Addierer ADD und dem Anzeigemittel 11 und/oder dem achten Block 2.8 zur Speicherung des Diagnoseabschlussbits angenommen.

Zur Steigerung der Zuverlässigkeit und Reproduzierbarkeit der Diagnoseaussagen sind die Schalter S1, S2 in Verbindung mit einem neunten 2.9 Block und einem weiteren Schalter S3 vorgesehen. Die Funktion dieser Anordnung besteht darin, die Diagnosefunktion beim Vorliegen gewisser Stoppkriterien zu unterbrechen. Ein Stoppkriterium besteht darin, die Diagnose in bestimmten Betriebsbereichen der Brennkraftmaschine, beispielsweise bei hoher Luftmasse ML oder Luftmenge (allgemein hoher Last) und/oder hoher Drehzahl n auszublenden. Diese Vorgehensweise ist beispielsweise dann sinnvoll, wenn der Motor in diesem Betriebsbereich außerhalb der Lambda=1 Regelung betrieben wird.

Dieser Betriebszustand wird in einem zehnten Block 2.10 festgestellt, der daraufhin die Schalter S1 und S2 öffnet. Das Öffnen des Schalters S1 bewirkt eine Unterbrechung der DKATI-Bildung und das Öffnen des Schalters S2 hat das Anhalten einer Zeitermittlung zur Folge. Dabei erfolgt die Zeitmessung auch zu dem Zweck, den Vergleich mit dem Diagnose-Schwellenwert im siebten Block 2.7 durch Schließen des Schalters S3 erst nach Ablauf einer vorbestimmten Diagnosezeitspanne zu erlauben, wobei die Diagnosezeitspanne durch Stopp-Phasen bei geöffneten Schaltern S1, S2 nicht verkürzt wird. Der neunte Block 2.9 repräsentiert den Vergleich des Zählerstandes des Ereigniszählers Z mit einem vorgegebenen Zeit-Schwellenwert.

Als weiteres Stoppkriterium kann die Katalysatorbelastung KATIN verwendet werden. Überschreitet diese beispielsweise einen vorgegebenen Maximalwert, könnte auch ein noch nicht gefüllter Katalysator 7 den mit hohem KATIN verbundenen Sauerstoffeintrag pro Zeiteinheit nicht vollständig speichern, so dass auch hinter dem Katalysator 7 noch Sauerstoff messbar wäre. Um diesen Fall einer das Diagnoseergebnis möglicherweise verfälschenden Katalysatorüberlastung auszublenden, werden auch hier die Schalter S1 und S2 geöffnet.

Demnach unterbleibt also die Integration, wenn der Katalysator 7 nicht ausgleichend auf den Sauerstoffgehalt im Abgas einwirken kann.

Dies kann dann beispielsweise dann vorkommen, wenn der in den Katalysator 7 pro Zeiteinheit einströmende Sauerstoffüberschuß oder Mangel einen vorgegebenen Maximalwert überschreitet.

Bei der Ermittlung der Katalysatorbelastung KATIN, gegebenenfalls pro Zeiteinheit, kann das Produkt der von der Brennkraftmaschine 1, gegebenenfalls pro Zeiteinheit, angesaugten Luftmasse ML oder der Luftmenge und der Abweichung der Reglerstellgröße FR vom neutralen, stöchiometrischer Gemischzusammensetzung entsprechenden Wert berücksichtigt werden. Alternativ zur Reglerstellgröße FR kann direkt die Abweichung des Signals USVK der Abgassonde 8 vor Kat verwendet werden.

Außerdem unterbleibt die Integration dann, wenn die sauerstoffabhängige Katalysatorbelastung KATIN einen vorgegebenen Maximalwert überschreitet oder einen vorgegebenen Minimalwert unterschreitet.

Der vorgegebene Maximalwert sollte dabei dem maximalen Sauerstoffspeichervermögen eines gerade noch funktionsfähigen Katalysators 7 entsprechen.

Bei der Ermittlung der sauerstoffabhängigen Katalysatorbelastung KATIN kann eine Integration des Produktes der von der Brennkraftmaschine 1, gegebenenfalls pro Zeiteinheit, angesaugten Luftmasse ML oder Luftmenge und der Abweichung der Reglerstellgröße FR vom neutralen, stöchiometrischer Gemischzusammensetzung entsprechenden Wert berücksichtigt werden. Alternativ zur Reglerstellgröße kann auch hier direkt die Abweichung des Signals USVK der Abgassonde 8 vor Kat verwendet werden.

Soweit wie bisher beschrieben, ist der Gegenstand bereits durch die eingangs genannte DE 196 23 335 (US 5 987 883) bekannt. Ein wesentliches Element der Erfindung liegt in der veränderten Bildung der Bedingungen, die ein Stoppen der Beurteilung des Katalysators 7, beispielsweise einen Integrationsstopp im Integrator des sechsten Blocks 2.6, auslösen.

Ein Ausführungsbeispiel der Erfindung als Ausgestaltung des zehnten Blockes 2.10 ist in Fig. 4 näher dargestellt.

In einem ersten Vergleicher V1 wird der Wert der angesaugten Luftmasse ML oder der Luftmenge mit einem Schwellenwert verglichen. In einem zweiten Vergleicher V2 findet ein Vergleich der aktuellen Drehzahl n mit einem Schwellenwert statt. Jede Schwellenwertüberschreitung löst über eine erste Oder-Verknüpfung OR1 und über eine zweite Oder-Verknüpfung OR2 separat ein Stoppsignal aus, mit dem die Schalter S1 und S2 geöffnet werden. Dieses Stoppsignal wird gleichermaßen über die zweite Oder-Verknüpfung OR2 ausgelöst, wenn die Katalysatorbelastung KATIN einen Schwellenwert überschreitet. Zu dieser Feststellung ist ein dritter Vergleicher V3 vorgesehen.

Erfindungsgemäß ist der Schwellenwert für die Katalysatorbelastung KATIN von der Amplitude AHK des Signals USHK der Abgassonde 9 hinter Kat abhängig. Das Signal AHK nach dem fünften Block 2.5 von Fig. 2 wird gegebenenfalls einem ersten Kennlinienglied K1 in Fig. 4 zugeführt, das eine Signalbeeinflussung ermöglicht. Das Ausgangssignal des ersten Kennlinienglieds K1 wird in einem zweiten Multiplikationsglied M2 mit dem Ausgangssignal eines gegebenenfalls vorgesehenen zweiten Kennlininglieds K2 multipliziert, dem das Signal der Luftmasse ML zugeführt ist. Das zweite Kennlinienglied K2 ermöglicht ebenfalls eine Signalbeeinflussung. Der Vergleich an sich findet, wie bereits erwähnt, im dritten Verleicher V3 statt.

Der aus der Luftmasse ML oder der Luftmenge und der Amplitude AHK gebildete Vergleichswert ist derart festgelegt, dass der Vergleichswert für den dritten Vergleicher V3 mit steigender Amplitude AHK oder Schwankungsbreite der Amplitude AHK niedriger wird. Anders ausgedrückt: Bei gutem Katalysator 7 sind die Amplituden AHK niedriger und in diesem Fall kann die Diagnose auch noch bei höherer Katalysatorbelastung KATIN zumindest zu einem Diagnoseergebnis führen, wenn der Katalysator 7 noch funktionsfähig ist.

Der Hintergrund dieser Maßnahme wird durch Fig. 5 verdeutlicht, die auf den Wert Eins normierte Amplituden AHK über der Katalysatorbelastung KATIN für verschieden stark gealterte Katalysatoren 7 zeigt. KATIN ist gleich 1, wenn die Amplituden AHK des Signals USHK der Abgassonde 9 hinter Kat maximal sind. Linie 5.1 zeigt den Verlauf für einen Katalysator 7, der gerade als schlecht zu diagnostizieren ist. Linie 5.2 zeigt einen noch funktionsfähigen Katalysator 7 und Linie 3 zeigt einen vergleichsweise wenig gealterten Katalysator 7. Das mit I bezeichnete Intervall auf der KATIN-Achse entspricht dem KATIN-Bereich, in dem die Diagnose nach dem Stand der Technik aktiv ist. Dieser Bereich zeichnet sich durch einen vergleichsweise großen Abstand A zwischen den Amplituden AHK hinter einem bereits schlechten und einem noch guten Katalysator 7 aus. Dieser Abstand A zwischen den Linien 5.1 und 5.2 wird bei kleinem und großem KATIN kleiner, was bedeutet, dass die Zuverlässigkeit der Unterscheidung von noch guten und bereits schlechten Katalysatoren 7 abnimmt. Die Linie 5.3 behält jedoch auch bei größerem KATIN noch einen vergleichsweise großen Abstand A von der Linie 1. Dies bedeutet, dass sich noch wenig gealterte Katalysatoren 7, die sich durch eine kleine Amplitude AHK oder Schwankungsbreite der Amplitude AHK des Signals USHK der Abgassonde 9 hinter Kat auszeichnen, noch deutlich von bereits schlechten Katalysatoren 7 unterscheiden lassen. Dies wird erfindungsgemäß ausgenutzt, indem das aktive Intervall I bei kleinen Amplituden AHK auf einen größeres Intervall I1 ausgedehnt wird.

Als Alternative oder Ergänzung kommt auch eine Ausdehnung des aktiven Bereiches zu kleinerem KATIN in Frage, was durch die Einzeichnung eines weiteren Intervalls I2 verdeutlicht wird. Im Ergebnis wird durch die Erfindung die Häufigkeit, mit der eine Diagnose erfolgreich, das heißt mit einem Ergebnis abgeschlossen werden kann, deutlich erhöht.

Wie weiter oben bereits bemerkt, wird bei dem vorbekannten Verfahren der Katalysatordiagnose die Auslösung der Diagnose hauptsächlich über ein Verlassen des erlaubten Last/Drehzahl-Bereiches eingeschränkt. Dieser Bereich ist in der Fig. 6 qualitativ als B1 bezeichnet. Die Erfindung erlaubt dagegen die Bestätigung von funktionsfähig vermuteten Katalysatoren 7 in einem größeren Bereich B2, was die erfindungsgemäß angestrebte Steigerung der Häufigkeit von Diagnoseergebnissen bewirkt.

## Patentansprüche

1. Verfahren zur Diagnose eines in einem Abgassystem (6) einer Brennkraftmaschine (1) angeordneten Katalysators (7) mit den Schritten:
- Erfassen des Signals (USHK) einer Abgassonde (9) hinter Kat,
- Bilden einer Grenzwertmodellamplitude (AHKF) aus wenigstens einer stromaufwärts des Katalysators (7) auftretenden Größe (ML, n),
- Bilden einer Katalysatorbeurteilungsgröße (DKATI), deren Wert mit wachsender Abweichung der Amplitude (AHK) des Signals (USHK) von der Grenzwertmodellamplitude (AHKF) ansteigt,
- Beurteilen der Funktionsfähigkeit des Katalysators (7) auf der Basis der Katalysatorbeurteilungsgröße (DAKTI)
- Stoppen der Beurteilung, wenn eine sauerstoffabhängige Katalysatorbelastungsgröße (KATIN) einen Schwellenwert über-/oder unterschreitet,
**dadurch gekennzeichnet,**
**dass** der Schwellenwert vom Signal (USHK) der Abgassonde (9) hinter Kat abhängig ist.

2. Verfahren nach Anspruch 1, **dadurch gekennzeichnet, dass** der Schwellenwert abhängig von der Schwankungsbreite des Signals (USHK) der Abgassonde (9) hinter Kat vorgegeben wird.

3. Verfahren nach Anspruch 2, **dadurch gekennzeichnet, dass** einer bestimmten Schwankungsbreite ein bestimmter Schwellenwert zugeordnet ist und dass der Schwellenwert verkleinert wird, wenn die Schwankungsbreite die bestimmte Schwankungsbreite unterschreitet.

4. Verfahren nach Anspruch 2 oder 3, **dadurch gekennzeichnet, dass** einer bestimmten Schwankungsbreite ein bestimmter Schwellenwert zugeordnet ist und dass der Schwellenwert vergrößert wird, wenn die Schwankungsbreite die bestimmte Schwankungsbreite überschreitet.

5. Verfahren nach einem der vorhergehenden Ansprüche, **dadurch gekennzeichnet, dass** der Katalysator (7) als nicht funktionsfähig beurteilt wird, wenn die Katalysatorbeurteilungsgröße (DKATI) nach einer vorgegebenen Zeitspanne einen vorgegebenen Diagnose-Schwellenwert überschreitet.

6. Verfahren nach einem der vorhergehenden Ansprüche, **dadurch gekennzeichnet, dass** bei dem Bilden der Grenzwertmodellamplitude (AHKF) als stromaufwärts des Katalysators (7) auftretende Größen die Luftmasse (ML) oder die Luftmenge und/oder die Drehzahl (n) und/oder ein Signal (USVK) einer Abgassonde (8) vor Kat herangezogen ist.

7. Verfahren nach einem der vorhergehenden Ansprüche, **dadurch gekennzeichnet, dass** zur Bildung der Katalysatorbeurteilungsgröße (DKATI) die Differenz zwischen der Grenzwertmodellamplitude (AKHF) und der Amplitude (AHK) aufsummiert (integriert) wird.

8. Verfahren nach Anspruch 7, **dadurch gekennzeichnet, dass** die Aufsummation unterbleibt, wenn die Katalysatorbelastungsgröße (KATIN) einen Maximalwert überschreitet oder einen Minimalwert unterschreitet.

9. Verfahren nach Anspruch 7, **dadurch gekennzeichnet, dass** die Aufsummation unterbleibt, wenn die Katalysatorbelastung (KATIN) pro Zeiteinheit einen Maximalwert überschreitet oder Minimalwert unterschreitet.

10. Verfahren nach Anspruch 6, **dadurch gekennzeichnet, dass** bei der Bildung der Katalysatorbelastungsgröße (KATIN) das das Produkt der von der Brennkraftmaschine (1) pro Zeiteinheit angesaugten Luftmasse (ML) oder Luftmenge und der von der Abgassonde (8) vor Kat erfaßten Abweichung der Sauerstoffkonzentration im Abgas von der bei stöchiometrischer Verbrennung auftretenden Sauerstoffkonzentration berücksichtigt ist.

11. Verfahren nach Anspruch 6, **dadurch gekennzeichnet, dass** bei der Bildung der Katalysatorbelastungsgröße (KATIN) eine Integration des Produktes der von der Brennkraftmaschine (1) pro Zeiteinheit angesaugten Luftmasse (ML) oder der Luftmenge und der Abweichung einer Reglerstellgröße (FR) eines Gemischregelkreises vom einem neutralen Wert berücksichtigt ist.

12. Elektronische Steuereinrichtung zur Durchführung wenigstens eines der Verfahren nach den Ansprüchen 1 bis 11.

## Claims

1. Method for diagnosing a catalytic converter (7) arranged in an exhaust system (6) in an internal combustion engine (1), having the steps:
- the signal (USHK) of an exhaust gas probe (9) downstream of the catalytic converter is acquired,
- a limiting-value model amplitude (AHKF) is formed from at least one variable (ML, n) occurring upstream of the catalytic converter (7),
- a catalytic converter evaluation variable (DKATI) is formed, the value of said variable (DKATI) rising as the deviation of the amplitude (AHK) of the signal (USHK) from the limiting-value model amplitude (AHKF) increases,
- the functional capability of the catalytic converter (7) is evaluated on the basis of the catalytic converter evaluation variable (DAKTI),
- the evaluation is stopped if an oxygen-dependent catalytic converter load variable (KATIN) exceeds and/or drops below a threshold value,
**characterized in that** the threshold value is dependent on the signal (USHK) of the exhaust gas probe (9) downstream of the catalytic converter.

2. Method according to Claim 1, **characterized in that** the threshold value is predefined as a function of the fluctuation range of the signal (USHK) of the exhaust gas probe (9) downstream of the catalytic converter.

3. Method according to Claim 2, **characterized in that** a specific threshold value is assigned to a specific fluctuation range, and **in that** the threshold value is reduced if the fluctuation range drops below the specific fluctuation range.

4. Method according to Claim 2 or 3, **characterized in that** a specific threshold value is assigned to a specific fluctuation range, and **in that** the fluctuation range is increased if the fluctuation range exceeds the specific fluctuation range.

5. Method according to one of the preceding claims, **characterized in that** the catalytic converter (7) is evaluated as being functionally incapable if the catalytic converter evaluation variable (DKATI) exceeds a predefined diagnostic threshold value after of a predefined time period.

6. Method according to one of the preceding claims, **characterized in that**, when the limiting-value model amplitude (AHKF) is formed the air mass flow rate (ML) or the air quantity and/or the rotational speed (n) and/or a signal (USVK) of an exhaust gas probe (8) upstream of the catalytic converter are used as variables occurring upstream of the catalytic converter (7).

7. Method according to one of the preceding claims, **characterized in that** the difference between the limiting-value model amplitude (AKHF) and the amplitude (AHK) is summed (integrated) in order to form the catalytic converter evaluation variable (DKATI).

8. Method according to Claim 7, **characterized in that** the summing does not occur if the catalytic converter load variable (KTIN) exceeds a maximum value or drops below a minimum value.

9. Method according to Claim 7, **characterized in that** the summing does not occur if the catalytic converter load (KATIN) per time unit exceeds a maximum value or drops below a minimum value.

10. Method according to Claim 6, **characterized in that** the product of the air mass flow rate (ML) sucked in by the internal combustion engine (1) per time unit or air quantity and the deviation, sensed by the exhaust gas probe (8) upstream of the catalytic converter, of the oxygen concentration in the exhaust gas from the oxygen concentration occurring during stoichiometric combustion is taken into account in the formation of the catalytic converter load variable (KATIN).

11. Method according to Claim 6, **characterized in that** an integration of the product of the air mass flow rate (ML) sucked in by the internal combustion engine (1) per time unit or the air quantity and the deviation of a controller manipulated variable (FR) of a mixture control circuit from a neutral value is taken into account in the formation of the catalytic converter load variable (KATIN).

12. Electronic control device for carrying out at least one of the methods according to Claims 1 to 11.

## Revendications

1. Procédé de diagnostic d'un catalyseur (7) disposé dans un système de gaz d'échappement (6) d'un moteur à combustion interne (1), comportant les étapes consistant à :
- enregistrer le signal (USHK) provenant d'une sonde des gaz d'échappement (9) placée après le catalyseur,
- former une amplitude de modèle de valeur limite (AHKF) à partir d'au moins une grandeur (ML, n) apparaissant en amont du catalyseur (7),
- former une grandeur d'évaluation du catalyseur (DKATI) dont la valeur augmente à mesure que s'accroît l'écart entre l'amplitude (AHK) du signal (USHK) et l'amplitude de modèle de valeur limite (AHKF),
- évaluer la fonctionnalité du catalyseur (7) sur la base de la grandeur d'évaluation du catalyseur (DKATI),
- arrêter l'évaluation lorsqu'une grandeur de charge du catalyseur dépendante de l'oxygène (KATIN) dépasse une valeur de seuil ou passe en dessous de celle-ci,
**caractérisé en ce que**
la valeur de seuil dépend du signal (USHK) de la sonde des gaz d'échappement (9) placée après le catalyseur.

2. Procédé selon la revendication 1,
**caractérisé en ce que**
la valeur de seuil est prédéterminée en fonction de la largeur d'oscillation du signal (USHK) de la sonde des gaz d'échappement (9) placée après le catalyseur.

3. Procédé selon la revendication 2,
**caractérisé en ce qu'**
à une largeur d'oscillation donnée est associée une valeur de seuil donnée et la valeur de seuil est réduite lorsque la largeur d'oscillation passe en dessous de la largeur d'oscillation donnée.

4. Procédé selon la revendication 2 ou 3,
**caractérisé en ce qu'**
à une largeur d'oscillation donnée est associée une valeur de seuil donnée et la valeur de seuil est augmentée lorsque la largeur d'oscillation dépasse la largeur d'oscillation donnée.

5. Procédé selon l'une des revendications précédentes,
**caractérisé en ce que**
le catalyseur (7) est évalué comme non fonctionnel lorsque la grandeur d'évaluation du catalyseur (DKATI) dépasse, après une période de temps prédéterminée, une valeur de seuil de diagnostic prédéterminée.

6. Procédé selon l'une des revendications précédentes,
**caractérisé en ce que**
lors de la formation de l'amplitude de modèle de valeur limite (AHKF), on utilise en tant que grandeurs apparaissant en amont du catalyseur (7) la masse d'air (ML) ou la quantité d'air et/ou le régime (n) et/ou un signal (USVK) d'une sonde des gaz d'échappement (8) placée en amont du catalyseur.

7. Procédé selon l'une des revendications précédentes,
**caractérisé en ce que**
pour la formation de la grandeur d'évaluation du catalyseur (DKATI), on fait la somme (intègre) de la différence entre l'amplitude de modèle de valeur de seuil (AHKF) et l'amplitude (AHK).

8. Procédé selon la revendication 7,
**caractérisé en ce que**
l'accumulation n'a pas lieu lorsque la grandeur de charge du catalyseur (KATIN) dépasse une valeur maximale ou passe en dessous d'une valeur minimale.

9. Procédé selon la revendication 7,
**caractérisé en ce que**
l'accumulation n'a pas lieu lorsque la charge du catalyseur (KATIN) dépasse une valeur maximale ou passe en dessous d'une valeur minimale, par unité de temps.

10. Procédé selon la revendication 6,
**caractérisé en ce que**
lors de la formation de la grandeur de charge du catalyseur (KATIN), on prend en compte le produit de la masse d'air (ML) ou de la quantité d'air admise par le moteur à combustion interne (1) par unité de temps et de l'écart, enregistré par la sonde des gaz d'échappement (8) située en amont de catalyseur, entre la concentration en oxygène dans les gaz d'échappement et la concentration en oxygène apparaissant dans le cas d'une combustion stoechiométrique.

11. Procédé selon la revendication 6,
**caractérisé en ce que**
lors de la formation de la grandeur de charge du catalyseur (KATIN), on prend en compte une intégration du produit de la quantité d'air ou de la masse d'air (ML) admise par le moteur à combustion interne (1) par unité de temps et de l'écart entre une grandeur de réglage du régulateur (FR) d'un circuit régulateur de mélange et une valeur neutre.

12. Dispositif de commande électronique permettant de mettre en oeuvre au moins l'un des procédés selon les revendications 1 à 11.
